# DEMANDE DE BREVET EUROPEEN

(11) **EP 2 902 238 A1**
(43) Date de publication de la demande: **05.08.2015**
(21) Numéro de dépôt: 14196969.1
(22) Date de dépôt: 09.12.2014
(51) Int. Cl.: B60K 17/02, B60K 6/365, B60K 6/38, B60K 6/40, B60K 6/405, B60K 6/48

(54) **UNITÉ DE COUPLAGE OU DE DÉCOUPLAGE POUR GROUPE MOTO-PROPULSEUR DE VÉHICULE AUTOMOBILE**

(30) Priorité: 30.01.2014 FR 1450735
(71) Demandeur: PEUGEOT CITROËN AUTOMOBILES SA, 78140 Velizy-Villacoublay (FR)
(72) Inventeur: Gauthier, Pierre, 92370 Chaville (FR); Delaporte, Jerome, 91690 St. Cyr la Riviere (FR); Adam, Gilles, 92150 Suresnes (FR)

(57) **Abrégé**

Unité de couplage ou de découplage (20) pour groupe moto-propulseur de véhicule automobile, comprenant une entrée (20N) qui est adaptée à être reliée à un moteur thermique (18) du groupe moto-propulseur et une sortie (20S) qui est adaptée à être reliée à un axe d'entrée (16) d'un noyau de démultiplication (12) du groupe moto-propulseur et, entre ladite entrée et ladite sortie, un embrayage (85) à pluralité d'états embrayés de couplage et un volant d'inertie (90) d'hybridation mécanique. Ce volant (90) comprend un rotor (100) de machine électrique d'hybridation pour que de l'énergie d'hybridation par inertie et par motorisation électrique de ladite machine puisse transiter entre le volant d'inertie et la sortie via l'embrayage.

## Description

La présente invention est relative à une unité de couplage ou de découplage pour groupe moto-propulseur de véhicule automobile.

Classiquement, une telle unité est un embrayage interposé entre un moteur et une boîte de vitesses d'un véhicule, la nature de l'embrayage étant souvent déterminée par la nature de la boîte de vitesses.

Dans le domaine des transmissions de puissance, on connaît les boîtes mécaniques classiques, pilotées ou non, comprenant une série d'engrenages crabotables/décrabotables déterminant les rapports de vitesses installés entre un arbre primaire entrainé par le moteur d'un véhicule et un arbre secondaire entraînant un train de roues du véhicule. Ces boîtes de vitesses sont habituellement associées à des embrayages à disque de friction, de type à commande par pédale d'embrayage ou à commande robotisée.

En outre, des boîtes de vitesses automatiques à train épicycloïdal sont souvent associées à des convertisseurs de couple jouant le rôle de l'embrayage interposé entre le moteur et la boîte de vitesses.

Par ailleurs, certains véhicules sont équipés des systèmes de transmission à variation continue (souvent appelées CVT pour « Continuously Variable Transmission » en anglais) composés de deux poulies dont les gorges sont à écartement variable, reliées par une courroie. En fonction de l'écartement des parois des poulies, la courroie pénètre plus ou moins près du centre, et change le rapport de démultiplication en conséquence. Les CVT actuelles permettent d'optimiser en continu le point de fonctionnement du moteur, mais leur rendement mécanique est plus faible que celui d'une transmission discrète classique. L'embrayage associé est par exemple de type convertisseur de couple, de type multi-disques ou de type électromagnétique.

Dans une gamme de véhicules de différentes motorisations, il est difficile de joindre les impératifs d'architectures classiques de boîte de vitesses et d'embrayage sans rendre complexe la gestion des différentes possibilités. La complexité est d'autant plus grande que les mêmes moteurs servent pour une grande variété de véhicules et que les variétés de prestations augmentent. L'hybridation des véhicules vient encore ajouter des contraintes.

Concernant l'hybridation, dans la règlementation à venir, les véhicules automobiles auront la nécessité de réaliser plusieurs kilomètres sans émission de dioxyde de carbone (CO2). Des contraintes supplémentaires viennent s'ajouter pour stocker une grande quantité d'énergie afin de disposer des prestations de roulage sans émissions de CO2 sur de longues distances.

Par ailleurs, le document US2012/0262105A1 est relatif à l'hybridation de véhicules, suivant des solutions plus ou moins complexes.

La présente invention a notamment pour but de proposer une solution alternative aux solutions existantes.

A cet effet, l'invention a pour objet une unité de couplage ou de découplage pour groupe moto-propulseur de véhicule automobile, comprenant une entrée qui est adaptée à être reliée à un moteur thermique du groupe moto-propulseur et une sortie qui est adaptée à être reliée à un axe d'entrée d'un noyau de démultiplication du groupe moto-propulseur. L'unité comprend, entre ladite entrée et ladite sortie, un embrayage à pluralité d'états embrayés de couplage et un volant d'inertie d'hybridation mécanique. Ce volant comprend un rotor de machine électrique d'hybridation pour que de l'énergie d'hybridation par inertie et par motorisation électrique de ladite machine puisse transiter entre le volant d'inertie et la sortie via l'embrayage.

Dans divers modes de réalisation de l'unité selon l'invention, on peut éventuellement avoir recours en outre à l'une et/ou à l'autre des dispositions suivantes :
- un train épicycloïdal interposé entre le volant d'inertie et la sortie via l'embrayage ;
- l'embrayage est interposé d'une part entre l'entrée et la sortie et d'autre part entre le volant d'inertie et la sortie, au moins l'un des états embrayés de couplage de cet embrayage étant dédié à l'apport de puissance soit depuis le volant d'inertie vers la sortie alors découplée ou couplée de l'entrée soit depuis la sortie, découplée de l'entrée, vers le volant d'inertie ;
- l'embrayage comprend un disque principal solidaire à rotation de l'entrée, un disque d'hybridation solidaire à rotation du volant d'inertie via le train épicycloïdal et un organe de friction solidaire de la sortie, ces disques et cet organe pouvant coupler l'entrée et la sortie et/ou le volant d'inertie et la sortie via le train épicycloïdal ;
- le train épicycloïdal comprend des satellites interposés entre le volant d'inertie et le disque d'hybridation ;
- le volant d'inertie comprend d'une part une partie annulaire périphérique, sous forme de cylindre creux intégrant le rotor et d'autre part une portion radiale en disque, un stator étant intégré dans une zone annulaire d'un carter, cette zone étant logée dans un espace déterminé par la partie annulaire périphérique et la portion radiale en disque du volant d'inertie ;
- la zone annulaire est raccordée à une paroi radiale servant de porte-satellites du train épicycloïdal ;
- des conducteurs raccordés au stator passent à côté d'une extrémité libre de la partie annulaire périphérique du volant d'inertie, à l'opposé de la portion radiale en disque ;
- une enveloppe est logée avec jeu dans la zone annulaire du carter qui reçoit le stator, cette enveloppe étant solidaire du disque d'hybridation et d'une couronne dans laquelle les satellites tournent.

Par ailleurs, l'invention a également pour objet un groupe motopropulseur comprenant un moteur thermique, un noyau de démultiplication et une unité de couplage ou de découplage qui est conforme à l'invention. Cette unité est interposée entre le moteur et le noyau de démultiplication en ayant son entrée qui est reliée au moteur et sa sortie qui est reliée à un axe d'entrée du noyau de démultiplication de manière que l'énergie d'hybridation par inertie et par motorisation électrique de machine électrique d'hybridation de ladite unité puisse transiter entre le volant d'inertie et le noyau, le moteur thermique pouvant en outre apporter de l'énergie mécanique à la sortie de l'unité de couplage ou de découplage.

D'autres buts, caractéristiques et avantages de l'invention apparaîtront au cours de la description suivante de plusieurs modes de réalisation, donnés à titre d'exemples non limitatifs, en regard des dessins joints dans lesquels :

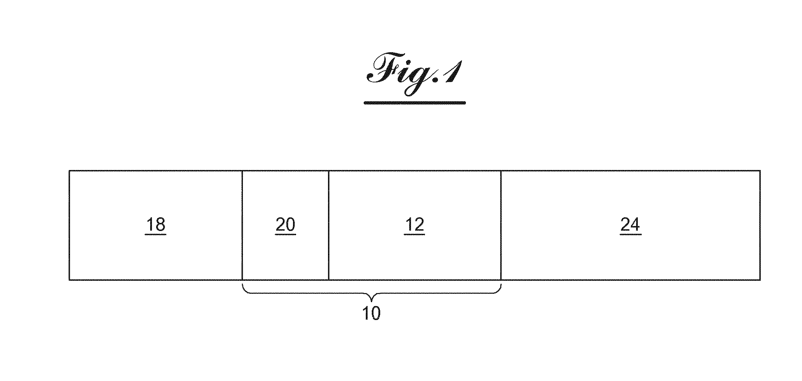

- la figure 1 est un schéma symbolisant une chaîne de propulsion pour véhicule automobile, incluant un groupe motopropulseur ayant un système de boîte de vitesses à module à volant d'inertie selon l'invention ;
- la figure 2 est un schéma de principe montrant de manière agrandie la cinématique dans un module à volant d'inertie selon l'invention ;
- la figure 3 est une vue de type en coupe du module selon l'invention, dans une configuration proche de celle de la représentation de la figure précédente ;
- la figure 4 est un schéma de principe de système électrique dans un véhicule pourvu du module selon l'invention ;
- la figure 5 est un schéma de principe d'une variante de réalisation du système électrique dans un véhicule pourvu du module selon l'invention.

L'invention est relative à une unité de couplage ou de découplage 20 pour groupe motopropulseur de véhicule automobile, cette unité faisant partie d'un système de boîte de vitesses dudit groupe motopropulseur. Ce système de boîte de vitesses, référencé 10 aux figures, comprend un noyau de démultiplication 12 qui est associé à l'unité selon l'invention dans une installation particulière d'un véhicule. En outre, ce noyau est susceptible d'être commun à une pluralité d'installations différentes suivant le véhicule automobile auquel le système est dédié. Le noyau de démultiplication 12 comprend plusieurs axes portant des roues dentées. Sur les différentes figures, les mêmes références désignent des éléments identiques ou similaires.

Le noyau de démultiplication 12 comprend un axe d'entrée 16 qui est prévu pour recevoir de l'énergie venant d'un moteur thermique 18 de propulsion du véhicule. Le noyau de démultiplication 12 présente une sortie qui est reliée à un sous ensemble 24 de sortie de transmission du véhicule automobile, comprenant en particulier des roues motrices.

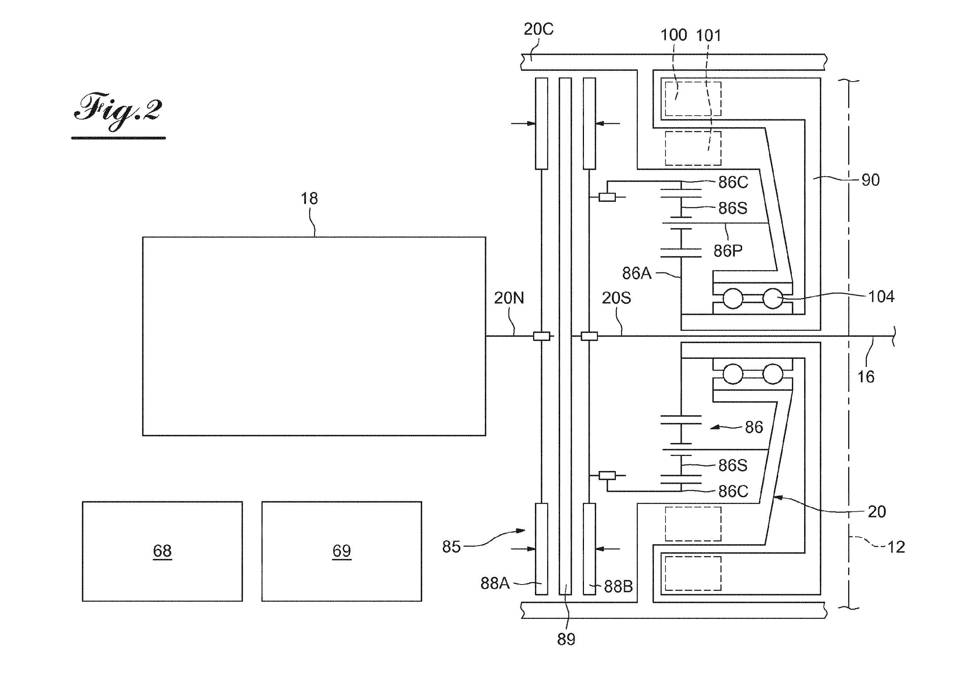

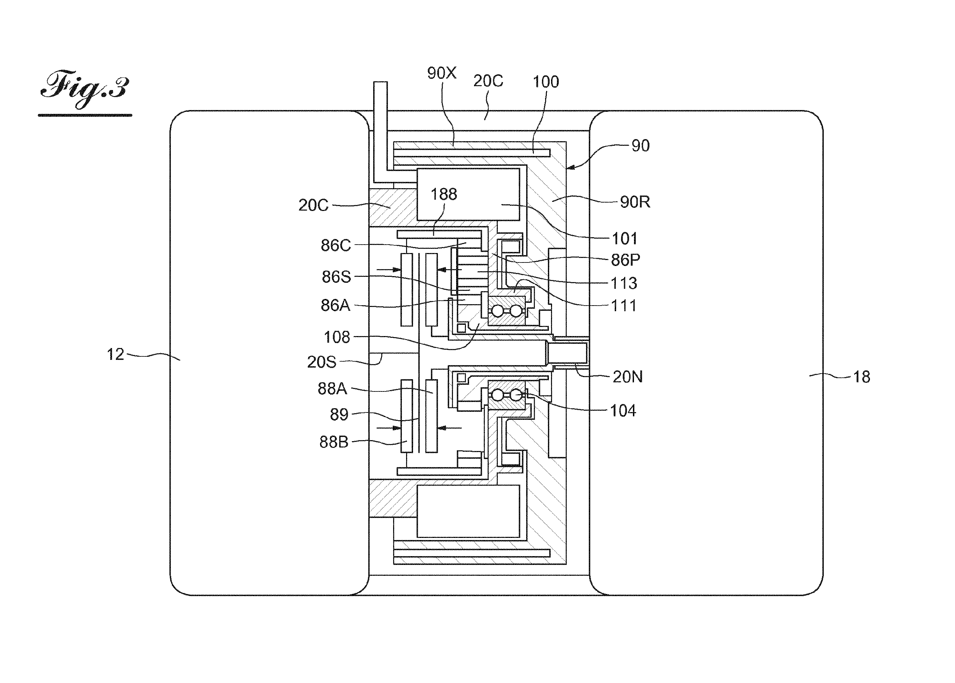

Entre le moteur thermique 18 et le noyau de démultiplication 12, le système de boîte de vitesses 10 comprend l'unité de couplage ou de découplage 20 selon l'invention. Cette unité 20 est à hybridation par volant d'inertie, un exemple de réalisation de cette unité étant représenté à la figure 2 et à la figure 3. L'unité 20 de couplage ou de découplage sert à coupler ou à découpler le moteur 18 relativement à l'axe d'entrée 16 du noyau de démultiplication 12 qui n'est pas détaillé. Ce noyau est par exemple un système de boîte de vitesses à ratio de démultiplication continument variable. Dans le mode de réalisation de la figure 2 et de la figure 3, l'unité 20 de couplage ou de découplage comprend un volant d'inertie 90 et un embrayage 85 de type présentant des organes de friction tels que des disques par exemple en environnement humide d'huile. L'embrayage 85 est de type à pluralité d'états embrayés de couplage. Le volant d'inertie 90 est associé à un train d'épicycloïdal 86 servant de réducteur. Le train épicycloïdal 86 est interposé entre le volant d'inertie 90 et l'embrayage 85, du côté de l'axe d'entrée 16 du noyau 12 formant boîte de vitesses.

L'unité de couplage ou de découplage 20 comprend un carter 20C, un organe tournant d'entrée 20N et un organe tournant de sortie 20S, ce dernier étant solidaire à rotation de l'axe d'entrée 16 du système de boîte de vitesses, si bien qu'ils sont sur un même trait à la figure 2. Le carter 20C sert de socle de liaison relativement au bloc du moteur thermique et/ou du noyau de démultiplication.

Cette unité 20 a son embrayage 85 qui permet de gérer la transmission de puissance soit par un disque principal 88A, soit par un disque d'hybridation 88B. Un organe de friction 89 est axialement fixe sur l'organe tournant de sortie 20S. Le disque principal 88A et le disque d'hybridation 88B sont montés sur des cannelures et sont pressés sur l'organe fixe de friction 89 par des vérins hydrauliques. Ainsi, le disque principal 88A et le disque d'hybridation 88B sont bistables en considérant des positions embrayées de transmission de couple et des positions débrayées à découplage.

Le disque principal 88A est solidaire à rotation de l'organe tournant d'entrée 20N, via des cannelures autorisant un mouvement axial. Pour ce qui concerne le disque principal 88A, l'embrayage est alors fermé pour un état embrayé de transmission de couple du moteur thermique relativement à la sortie. Le disque principal 88A solidaire à rotation de l'organe tournant d'entrée 20N embrayé avec l'organe de friction 89 solidaire à rotation de l'organe tournant de sortie 20S permet l'apport d'énergie du moteur 18 au noyau 12 de démultiplication.

Le disque d'hybridation 88B est solidaire à rotation du volant d'inertie 90 via le train épicycloïdal 86. Le disque d'hybridation 88B embrayé avec l'organe de friction 89 solidaire de l'organe tournant de sortie 20S permet l'apport d'énergie du volant d'inertie 90 au noyau 12 de boîte de vitesses, en moteur du véhicule. A cet état embrayé du disque d'hybridation 88B, le disque principal 88A peut aussi être embrayé pour que moteur thermique 18 puisse apporter de l'énergie aux roues motrices en parallèle du volant d'inertie 90. Le disque d'hybridation 88B embrayé avec l'organe de friction 89 solidaire de l'organe tournant de sortie 20S permet aussi l'apport d'énergie du noyau 12 vers le volant d'inertie 90, en récupération d'énergie de décélération. Ainsi, l'utilisation de l'inertie du volant d'inertie 90 peut apporter ponctuellement de l'énergie d'hybridation mécanique et peut aussi correspondre à de la récupération de l'énergie au freinage du véhicule. Il peut donc être indiqué de manière générale que l'embrayage 85 est interposé d'une part entre l'entrée 20N et la sortie 20S et d'autre part entre le volant d'inertie 90 et la sortie 20S, au moins l'un des états embrayés de couplage de cet embrayage 85 étant dédié à l'apport de puissance soit depuis le volant d'inertie 90 vers la sortie 20S alors découplée ou couplée de l'entrée 20N soit depuis la sortie 20S, découplée de l'entrée 20N, vers le volant d'inertie 90. Egalement, il peut être indiqué que l'organe axialement fixe de friction 89 est solidaire à rotation de la sortie 20S pour permettre, selon les états des disques, de coupler l'entrée et la sortie et/ou le volant d'inertie et la sortie via le train épicycloïdal.

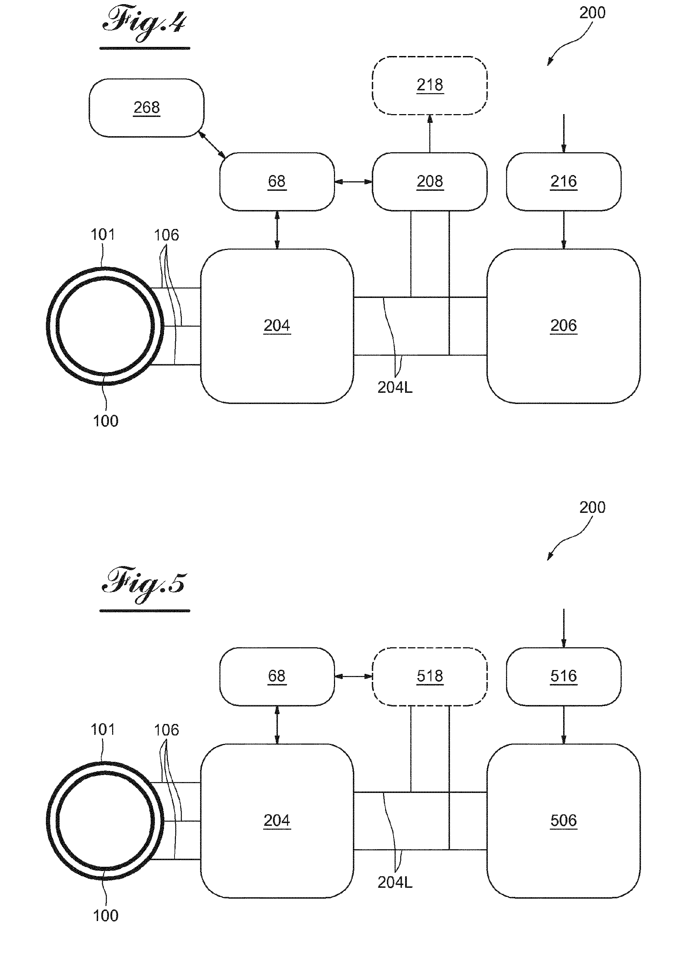

Le pilotage est assuré par un calculateur 68. L'embrayage 85 utilise par exemple de l'énergie hydraulique. De manière connue, cette énergie peut être délivrée par une pompe de génération de pression hydraulique et peut être gérée en particulier par un bloc hydraulique 69 associé. Le calculateur 68 peut être couplé à diverses unités de commande du véhicule telles que par exemple celles gérant la volonté du conducteur via sa pédale d'accélérateur située dans l'habitacle du véhicule ou le fonctionnement du moteur. Ces unités de commande, qui seront aussi évoquées plus tard dans la description en relation avec la figure 4, peuvent être aussi qualifiées de calculateur.

Le train épicycloïdal 86 comprend une roue centrale 86A qui est extérieurement dentée. Cette roue centrale 86A est montée folle relativement à la sortie 20S de l'unité de couplage. Le train épicycloïdal 86 comprend aussi un porte-satellites 86P qui est monté solidaire du carter 20C. Le disque d'hybridation 88B est solidaire à rotation d'une couronne extérieure dentée 86C, cette couronne extérieure étant dentée intérieurement. Des satellites 86S sont montés rotatifs entre la roue centrale 86A et la couronne extérieure dentée 86C. Les satellites 86S tournent sur eux même relativement au porte-satellites 86P qui est fixe.

Avantageusement, il est proposé d'intégrer une électrification dans le système d'hybridation mécanique de l'unité 20 pour donner au véhicule la capacité de rouler sans émettre de dioxyde de carbone (CO2) durant plusieurs kilomètres. Ainsi, l'électrification dans le système d'hybridation mécanique comprend l'incorporation d'un moteur électrique d'hybridation dans l'unité 20, le moteur électrique comprenant un rotor 100 et un stator 101. Ce moteur électrique peut aussi être dénommé machine électrique.

Dans le mode de réalisation de l'invention tel que représenté aux figures, le volant d'inertie 90 est mis à profit pour être utilisé en association avec le rotor 100 de la machine électrique. Le stator 101 est associé au carter 20C. Ainsi, le stator 101 de la machine électrique est fixé sur le carter 20C déterminant une cloche qui sépare le compartiment du double embrayage humide tournant dans un brouillard d'huile et le compartiment du volant d'inertie qui est dans une ambiance sèche pour éviter les pertes par barbotage. A titre d'exemple, la structure du volant d'inertie 90 peut intégrer une cage d'écureuil pour les machines de type asynchrone ou des aimants permanents pour les machines de type synchrone.

Le rotor 100 dans le volant d'inertie 90 est guidé par un roulement 104 afin de minimiser les pertes par frottement. Ce roulement 104 est interposé entre le volant d'inertie 90 pourvu du rotor 100 et le carter 20C pourvu du stator 101. Ce stator est constitué d'enroulements pour créer le flux magnétique du moteur électrique. Le circuit de lubrification du double embrayage humide qui projette de l'huile sur les parois internes de la cloche est aussi mis à profit pour dissiper de la chaleur en provenance du volant d'inertie équipé du rotor. Des conducteurs 106 sortent du carter 20C pour connecter le stator 101 du moteur électrique à un système d'électronique de puissance. Ce moteur est piloté par le calculateur 68 suivant deux modes principaux : d'une part un mode moteur pour maintenir un niveau d'énergie variable du volant d'inertie et propulser le véhicule et d'autre part un mode générateur pour transférer l'énergie vers les batteries du système pour les recharger.

Comme le montre la figure 3, le volant d'inertie 90 comprend d'une part une partie annulaire périphérique 90X, sous forme de cylindre creux intégrant le rotor 100 et d'autre part une portion radiale en disque 90R, supportant à blocage, avec une bague tournante 108, la bague intérieure du roulement 104. La bague 108 est à proximité par exemple de l'axe d'entrée 20N comme représenté à la figure 3 ou de l'axe de sortie 20S comme représenté à la figure 2, suivant l'orientation choisie de la machine électrique relativement à l'embrayage. En effet, l'orientation de l'embrayage relativement au noyau 12 et au moteur thermique 18 n'est pas la même à la figure 2 et à la figure 3. Cette différence d'orientation est choisie en fonction des contraintes d'architectures par exemple pour gérer l'espace disponible entre le moteur et le noyau.

Le stator 101 est intégré dans une zone annulaire du carter 20C, cette zone étant logée dans un espace déterminé par la partie annulaire périphérique 90X et la portion radiale en disque 90R du volant d'inertie 90. Le stator 101 est à proximité de ces parties, et en particulier radialement en regard du rotor. Cette zone est raccordée à une paroi radiale servant en particulier de porte-satellites 86P et dont le centre évidé est raccordé à un manchon 111 recevant la bague extérieure du roulement 104. Les conducteurs 106 passent à proximité de l'extrémité libre de la partie annulaire périphérique 90X du volant d'inertie, à l'opposé de la portion radiale en disque 90R. Les conducteurs 106 sont à côté de cette extrémité, en laissant un jeu de rotation entre les conducteurs et ladite extrémité. De plus, le carter 20C renferme par l'extérieur le volant d'inertie, en l'entourant. Cette périphérie du carter 20C est reliée au moteur thermique.

La bague 108 porte la roue centrale 86A. La paroi servant de porte-satellites 86P supporte des pions 113 d'axe de satellite. Une enveloppe 188 est logée avec jeu dans la zone annulaire du carter 20C qui reçoit le stator 101. Cette enveloppe 188 est solidaire à rotation du disque d'hybridation 88B et de la couronne 86C dans laquelle les satellites 86S tournent. Le disque d'hybridation 88B est mobile axialement relativement à l'enveloppe 188, pour se déplacer entre son état embrayé de couplage et son état débrayé de découplage.

L'unité de couplage 20 est associée à un système électrique 200 dont une première configuration est schématisée à la figure 4 et une variante est schématisée à la figure 5. La première configuration est une configuration de base pour une motorisation à hybridation de type rechargeable. L'expression « plugin » est souvent utilisée dans le milieu automobile pour qualifier la caractéristique « rechargeable » d'un véhicule pourvu d'une telle hybridation. La configuration en variante est pour une hybridation non rechargeable, de type avec fonction alternateur.

Un objectif de la base de traction électrique rechargeable de la première configuration est de permettre de la force de traction sans émission de CO2 pendant une longue période de roulage, en bénéficiant d'une certaine autonomie d'énergie électrique après recharge. Comme la figure 4 permet de le voir, le système électrique 200 comprend la machine électrique ayant le rotor 100 et le stator 101 qui sont dans l'unité de couplage et de découplage. Le système électrique 200 comprend une unité d'électronique de puissance 204 pour piloter la machine électrique en mode moteur ou générateur, en ayant des fonctions d'inverseur et de rectifieur. Le système électrique 200 comprend une batterie de puissance 206 dont la technologie, la tension et la quantité d'énergie dépendront des performances dynamiques et du nombre de kilomètres prévus dans les prestations du véhicule en roulage par énergie électrique. Le système électrique 200 comprend un convertisseur 208 qui convertit du courant continu en courant continu. Le système électrique 200 comprend le calculateur 68 qui est relié au convertisseur 208 et à l'unité 204 d'électronique de puissance. Le calculateur 68 est relié à d'autres calculateurs qui sont symbolisés globalement par un rectangle arrondi référencé 268. Par exemple, il s'agit du calculateur gérant la volonté du conducteur via sa pédale d'accélérateur De plus, ces calculateurs sont par exemple dédiés à la gestion particulière de fonctions du véhicule telles que la gestion de l'habitacle en gérant par exemple la climatisation ou l'accès via les ouvrants. Le calculateur 68 pilote en particulier l'électronique de puissance en fonction de la volonté du conducteur, du point de fonctionnement du véhicule et de l'état de charge de la batterie de puissance.

L'unité d'électronique de puissance 204 est directement reliée au moteur électrique via les conducteurs 106. La batterie de puissance 206 est reliée à l'unité d'électronique de puissance 204, via une liaison électrique 204L qui est aussi reliée au convertisseur 208. La batterie de puissance 206 est aussi reliée à un chargeur 216 prévu pour le branchement du véhicule à un réseau électrique externe via par exemple une borne de recharge permettant de délivrer du courant pour recharger la batterie de puissance quand le véhicule est dans des phases de stationnement.

Le convertisseur 208 est aussi relié au réseau de bord du véhicule, typiquement un réseau basse tension, par exemple un réseau de 12 Volts symbolisé par un rectangle arrondi référencé 218. Ce réseau alimente divers équipements dans le véhicule, dédiés par exemple à l'éclairage, au fonctionnement d'interfaces du poste de conduite ou autres fonctions. Ainsi, le convertisseur 208 assure la tension de réseau de bord 12 Volts du véhicule à partir de la tension de la batterie de puissance.

Le fonctionnement de l'unité 20 de couplage et de découplage en relation avec le moteur thermique 18, le système électrique 200 et le noyau 12 ressort déjà en partie de la description qui précède et va maintenant être détaillé. Le rôle du volant d'inertie électrifié va dépendre en particulier des états de l'embrayage.

Quand le disque principal 88A de l'embrayage 85 est activé, le moteur thermique 18 fournit de la puissance au noyau 12 pour permettre le déplacement du véhicule en mode de roulage par énergie de combustion de carburant. Quand l'embrayage 85 est au point mort, le disque principal 88A et le disque d'hybridation 88B sont inactifs et découplés du noyau 12, du fait que l'organe de friction 89 ne reçoit pas d'énergie. Quand le disque d'hybridation 88B de l'embrayage 85 est activé, le moteur électrique fourni de la puissance au noyau 12 pour permettre le déplacement du véhicule en mode de roulage par énergie électrique d'hybridation. Dans ce mode de roulage, l'inertie du volant d'inertie 90 peut aussi aider le moteur électrique à fournir de l'énergie pour le déplacement du véhicule. En effet, quand le véhicule roule en phase de décélération, que le moteur thermique tourne ou soit à l'arrêt, le disque d'hybridation 88B de l'embrayage 85 peut être activé pour récupérer de l'énergie mécanique venant des roues du véhicule via le noyau. Dans ce cas, le volant d'inertie 90 récupère de l'énergie mécanique et le rotor 100 qui lui est associé peut aussi fournir de l'énergie pour recharger la batterie de puissance 206 via le stator 101 et le reste de la chaîne de conduction dans le système électrique. L'embrayage peut être piloté pour gérer cette récupération d'énergie mécanique de décélération et l'unité 204 d'électronique de puissance peut aussi être pilotée pour gérer la recharge de récupération d'énergie. Quand les deux disques de l'embrayage sont embrayés à couplage, le véhicule peut disposer de l'énergie de propulsion des deux motorisations. Le moteur thermique peut redonner de la force d'inertie suivant le pilotage du disque d'hybridation quand le disque principal est embrayé. En comptant le neutre, quatre possibilités de fonctionnement de l'embrayage sont possibles. Ainsi, suivant les possibilités d'état embrayé et d'état débrayé des deux disques, une propulsion par le moteur thermique est possible, une recharge d'inertie est possible. De plus, une propulsion électrique est possible, une propulsion par inertie est possible et de la récupération d'énergie en décélération est possible.

Avantageusement, la solution à unité de couplage et de découplage électrifiée en disposant d'une motorisation permet d'accéder aux prestations de roulage sans émissions de dioxyde de carbone dans un véhicule à hybridation avec volant d'inertie. Avantageusement, pour disposer la machine électrique en association avec le volant d'inertie, il suffît d'intégrer un bobinage dont le volume et la masse s'associent à la fonction d'inertie de l'unité. Ainsi, il est permis de proposer à bas coût d'une cha*ine de traction à roulage sans émission de gaz de combustion de carburant lors d'un roulage avec hybridation du moteur thermique.

Un objectif de la base de traction électrique de la configuration en variante est de fournir de la tension de réseau de bord lorsque le véhicule et le moteur thermique sont à l'arrêt lors des phases de roulage par exemple en circulation urbaine.

Comme la figure 5 permet de le voir, le système électrique 200 comprend toujours la machine électrique ayant le rotor 100 et le stator 101 qui sont dans l'unité de couplage et de découplage. Le système électrique 200 comprend encore l'unité d'électronique de puissance 204 pour piloter la machine électrique en mode moteur ou générateur, suivant des fonctions d'inverseur et de rectifieur. Le système électrique 200 comprend une batterie 506 de réseau de bord par exemple fonctionnant à basse tension par exemple de 12 Volts. Cette batterie 506 de basse tension est raccordée à l'unité d'électronique de puissance 204 et au réseau de bord 518, sur le même principe de connexion que la batterie de puissance qui est maintenant absente tout comme le convertisseur est absent. Seule la batterie 506 de basse tension est maintenant présente pour alimenter le réseau de bord et la motorisation de l'unité de couplage et de découplage. En option, tel qu'illustré à la figure 5, un chargeur 516 peut être utilisé pour recharger la batterie 506 de basse tension pendant les phases de stationnement du véhicule. Le calculateur 68 est global pour gérer tant l'unité d'électronique de puissance 204 que les équipements électriques du véhicule, par exemple via cette unité. Le fonctionnement est inchangé, la batterie 506 alimentant le moteur électrique de l'unité de couplage ou de découplage 20 ou pouvant recevoir de l'énergie électrique de récupération.

En variantes non représentées, tout train d'engrenage par exemple de type épicycloïdal peut être utilisé en équivalent technique et l'embrayage peut être différent de celui représenté pour disposer de plusieurs états embrayés de coulage.

## Revendications

1. Unité de couplage ou de découplage (20) pour groupe moto-propulseur de véhicule automobile, comprenant une entrée (20N) qui est adaptée à être reliée à un moteur thermique (18) du groupe moto-propulseur et une sortie (20S) qui est adaptée à être reliée à un axe d'entrée (16) d'un noyau de démultiplication (12) du groupe moto-propulseur et, entre ladite entrée et ladite sortie, un embrayage (85) à pluralité d'états embrayés de couplage et un volant d'inertie (90) d'hybridation mécanique, ce volant comprenant un rotor (100) de machine électrique d'hybridation pour que de l'énergie d'hybridation par inertie et par motorisation électrique de ladite machine puisse transiter entre le volant d'inertie et la sortie via l'embrayage.

2. Unité selon la revendication précédente, comprenant un train épicycloïdal (86) interposé entre le volant d'inertie (90) et la sortie (20S) via l'embrayage (85).

3. Unité selon l'une quelconque des revendications précédentes, dans laquelle l'embrayage (85) est interposé d'une part entre l'entrée (20N) et la sortie (20S) et d'autre part entre le volant d'inertie (90) et la sortie (20S), au moins l'un des états embrayés de couplage de cet embrayage (85) étant dédié à l'apport de puissance soit depuis le volant d'inertie (90) vers la sortie (20S) alors découplée ou couplée de l'entrée (20N) soit depuis la sortie (20S), découplée de l'entrée (20N), vers le volant d'inertie (90).

4. Unité selon la revendication précédente et la revendication 2, dans laquelle l'embrayage (85) comprend un disque principal (88A) solidaire à rotation de l'entrée (20N), un disque d'hybridation (88B) solidaire à rotation du volant d'inertie (90) via le train épicycloïdal (86) et un organe de friction (89) solidaire de la sortie (20S), ces disques et cet organe pouvant coupler l'entrée et la sortie et/ou le volant d'inertie et la sortie via le train épicycloïdal.

5. Unité selon la revendication précédente, dans laquelle le train épicycloïdal (86) comprend des satellites (86S) interposés entre le volant d'inertie (90) et le disque d'hybridation (88B).

6. Unité selon l'une quelconque des revendications précédentes, dans laquelle le volant d'inertie (90) comprend d'une part une partie annulaire périphérique (90X), sous forme de cylindre creux intégrant le rotor (100) et d'autre part une portion radiale en disque (90R), un stator (101) étant intégré dans une zone annulaire d'un carter (20C), cette zone étant logée dans un espace déterminé par la partie annulaire périphérique (90X) et la portion radiale en disque (90R) du volant d'inertie.

7. Unité selon la revendication précédente et l'une quelconque des revendications 2 à 5, dans laquelle la zone annulaire est raccordée à une paroi radiale servant de porte-satellites (86P) du train épicycloïdal.

8. Unité selon l'une quelconque des revendications 6 à 7, dans laquelle des conducteurs (106) raccordés au stator (101) passent à côté d'une extrémité libre de la partie annulaire périphérique (90X) du volant d'inertie, à l'opposé de la portion radiale en disque (90R).

9. Unité selon l'une quelconque des revendications 6 à 8 combinée à la revendication 5, dans laquelle une enveloppe (188) est logée avec jeu dans la zone annulaire du carter (20C) qui reçoit le stator (101), cette enveloppe étant solidaire du disque d'hybridation (88B) et d'une couronne (86C) dans laquelle les satellites (86S) tournent.

10. Groupe motopropulseur comprenant un moteur thermique (18), un noyau de démultiplication (12) et une unité de couplage ou de découplage (20) qui est conforme à l'une quelconque des revendications précédentes, cette unité (20) étant interposée entre le moteur (18) et le noyau de démultiplication (12) en ayant son entrée (20N) qui est reliée au moteur (18) et sa sortie (20S) qui est reliée à un axe d'entrée (16) du noyau de démultiplication (12) de manière que l'énergie d'hybridation par inertie et par motorisation électrique de machine électrique d'hybridation de ladite unité puisse transiter entre le volant d'inertie et le noyau, le moteur thermique pouvant en outre apporter de l'énergie mécanique à la sortie (20S) de l'unité de couplage ou de découplage.
